# FASCICULE DE BREVET EUROPEEN

(11) **EP 3 128 281 B1**
(45) Date de publication et mention de la délivrance du brevet: **14.03.2018**
(21) Numéro de dépôt: 16290139.1
(22) Date de dépôt: 20.07.2016
(51) Int. Cl.: F41F 3/077

(54) **OPERCULE FLEXIBLE POUR CONTENEUR DE MISSILE**
FLEXIBLER VERSCHLUSSDECKEL FÜR BEHÄLTER EINES FLUGKÖRPERS
FLEXIBLE SEAL FOR MISSILE CONTAINER

(30) Priorité: 05.08.2015 FR 1501675
(43) Date de publication de la demande: 08.02.2017
(73) Titulaire: MBDA France, 92350 Le Plessis-Robinson (FR)
(72) Inventeur: LEROY, Bertrand, 92358 Le Plessis Robinson (FR); HERQUEL, Pascal, 92358 Le Plessis Robinson (FR)
(74) Mandataire: Hauer, Bernard

(56) Documents cités:
- EP-A1- 0 308 344
- FR-A1- 2 926 360
- JP-A- 2002 162 193
- US-A- 6 123 005

## Description

La présente invention concerne un opercule flexible pour conteneur de missile.

On sait qu'un opercule de conteneur a pour fonction de fermer hermétiquement le conteneur afin de protéger un missile installé dans ce conteneur. L'opercule doit pouvoir s'ouvrir afin de laisser passer le missile ou les gaz de propulsion lors du tir de ce dernier.

Généralement, les opercules se divisent en deux catégories :
- des opercules fragmentables, qui sont réalisés en général en matériaux composites ; et
- des mécanismes à ouvertures automatiques, le plus généralement métalliques.

Ces solutions présentent différents inconvénients. Plus précisément, les inconvénients de ces solutions sont :
- pour les opercules en matériaux composites :
   - la présence de débris projetés à des vitesses élevées dans diverses directions, ces débris présentant un danger pour les équipements à proximité, et même parfois pour le missile lui-même ; et
   - dans certains cas, un effort important sur le radôme du missile lors de la traversée de l'opercule en phase de départ ; et
- pour les mécanismes à ouvertures automatiques :
   - une gestion plus complexe de la sécurité afin de garantir l'ouverture ;
   - une masse beaucoup plus importante ; et
   - un coût de fabrication élevé.

Par le document FR-2 926 360, on connaît un opercule du type déformable, destiné à équiper le fond d'un conteneur de missile et apte à s'ouvrir sous la poussée des gaz de propulsion d'un missile contenu dans le conteneur et à se refermer après éjection du missile. L'opercule comprend une grille et un empilement de lames élastiques enserré entre une membrane de protection thermique et une membrane d'étanchéité, amont et aval, et maintenu entre un cadre de support amont et un cadre de support aval.

La présente invention a pour objet de pallier au moins certains des inconvénients précités. Plus précisément, elle a pour objet de remédier au problème des débris présentant un danger pour les équipements, tout en garantissant un effort modéré sur le radôme du missile, une faible masse et un coût de fabrication réduit.

La présente invention concerne un opercule flexible, destiné à être monté sur un conteneur de missile et apte à s'ouvrir sous une poussée.

Selon l'invention, l'opercule flexible comporte :
- au moins une couche dite composite, formée d'un matériau composite constitué d'au moins un tissu et d'au moins un élastomère ; et
- au moins une lame métallique plane, solidarisée de ladite couché composite par de l'élastomère et comprenant des lignes prédécoupées de fragilisation de l'opercule, les lignes prédécoupées étant agencées de manière à créer des zones en forme de pétales.

Avantageusement, au moins la couche composite et la lame métallique sont configurées pour revenir vers une position initiale après une ouverture de l'opercule.

Ainsi, grâce à l'invention, le ou les tissus qui sont introduits dans l'élastomère pour former le matériau composite assurent la tenue mécanique de l'opercule flexible qui est, de plus, rendu hermétique grâce notamment à l'élastomère. La lame métallique qui est insérée dans l'élastomère du matériau composite permet de diriger une découpe précise dudit matériau composite (élastomère/tissu), le long des lignes prédécoupées, ce qui permet une ouverture facilitée. En outre, la couche composite et la lame métallique, ainsi formées, permettent à l'opercule flexible de revenir vers une position initiale après une ouverture.

On obtient ainsi un opercule flexible qui permet d'éviter la génération de débris (présentant un danger pour les équipements), tout en garantissant un effort modéré sur le radôme du missile, une faible masse et un coût de fabrication réduit.

On notera que le document FR-2 926 360 précité n'enseigne pas, notamment :
- une couche composite, formée d'un matériau composite constitué d'au moins un tissu et d'au moins un élastomère ; et
- que la couche composite est solidarisée par de l'élastomère à une lame métallique plane comprenant des lignes prédécoupées de fragilisation de l'opercule.

De façon avantageuse, l'opercule flexible comporte :
- deux couches composites agencées de part et d'autre de la lame métallique ;
- un revêtement antifriction sur une face dite interne destinée à être placée vers l'intérieur du conteneur. Ce revêtement antifriction permet notamment de limiter les frottements lors du passage du missile.

En outre, de façon avantageuse, les lignes prédécoupées sont agencées radialement par rapport au centre de l'opercule.

Par ailleurs, dans un mode de réalisation particulier, ladite au moins une couche composite et la lame métallique sont agencées de sorte qu'au moins certaines des lignes prédécoupées de la lame métallique sont parallèles à au moins une orientation de fils du tissu du matériau composite (de la couche composite).

Dans un mode de réalisation préféré, la lame métallique est une pièce unique, dans laquelle sont pratiquées lesdites lignes prédécoupées.

Avantageusement, la lame métallique comporte également des évidements pour permettre de recevoir une partie de l'élastomère de ladite au moins une couche composite.

La présente invention concerne également un conteneur de missile, qui comporte au moins un opercule flexible tel que décrit ci-dessus.

La présente invention concerne, en outre, un système d'arme qui comprend au moins un tel conteneur de missile.

Les figures annexées feront bien comprendre comment l'invention peut être réalisée. Sur ces figures, des références identiques désignent des éléments semblables.

La figure 1 est une coupe transversale schématique d'un mode de réalisation préféré d'un opercule flexible selon l'invention.

La figure 2 une coupe transversale schématique d'un autre mode de réalisation d'un opercule flexible selon l'invention.

Les figures 3 et 4 sont deux vues schématiques en plan, illustrant des modes de réalisation différents de lignes prédécoupées d'une lame métallique d'un opercule flexible.

La figure 5 est une vue en plan d'un mode de réalisation préféré d'uné lame métallique d'un opercule flexible.

La figure 6 est une vue schématique, en perspective, de moyens de fixation d'un opercule flexible.

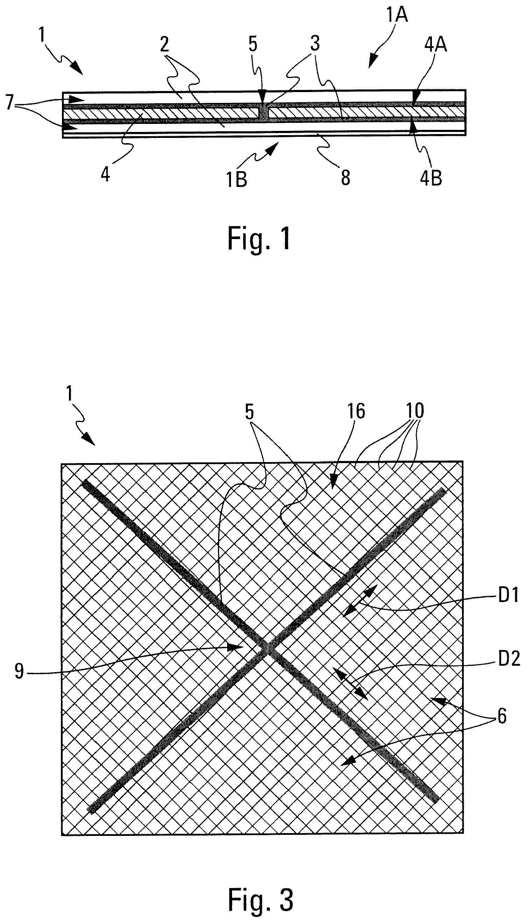

L'opercule flexible 1 illustrant l'invention et représenté schématiquement sur la figure 1 est destiné à être monté sur un conteneur de missile (non représenté).

Ce conteneur de missile fait partie d'un système d'arme (également non représenté).

L'opercule flexible 1 a pour fonction de fermer hermétiquement le conteneur afin de protéger un missile installé dans le conteneur. L'opercule flexible doit pouvoir s'ouvrir afin de laisser passer le missile ou les gaz de propulsion lors d'un tir de ce dernier.

Pour ce faire, l'opercule flexible 1 est configuré pour s'ouvrir sous une poussée. Dans le cadre de la présente invention, cette poussée peut être générée lors d'un tir par un contact de l'opercule flexible par le missile ou par une surpression interne générée par des moyens dédiés ou par des gaz de propulsion du missile.

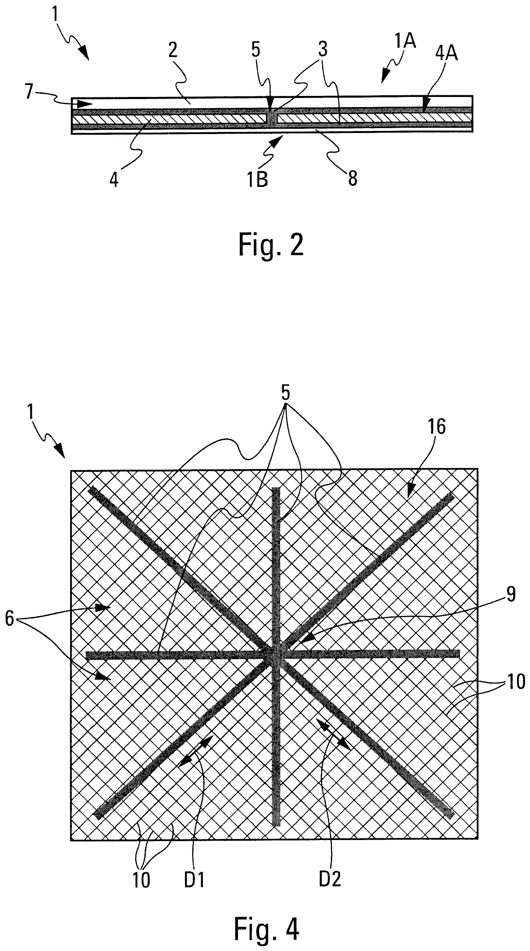

Selon l'invention, l'opercule flexible 1 comporte, comme représenté sur les figures 1 et 2 :
- au moins une couche (ou peau) 2 dite composite, cette couche composite 2 est formée d'un matériau composite 7 constitué d'au moins un tissu et d'au moins un élastomère ; et
- au moins une lame métallique 4 plane. Cette lame métallique 4 est solidarisée de (ou unie à ou jointe à) la couche composite 2 par de l'élastomère 3 du matériau composite 7, et elle comprend des lignes prédécoupées 5 (ou fentes) de fragilisation de l'opercule 1, les lignes prédécoupées 5 étant agencées de manière à créer des zones 6 en forme de pétales (figures 3 et 4).

De plus, la couche composite 2 et la lame métallique 4 sont configurées pour revenir vers une position initiale après une ouverture de l'opercule flexible 1.

La lame métallique 4 qui est insérée dans de l'élastomère 3 du matériau composite 7 permet de diriger une découpe précise du matériau composite (élastomère/tissu), le long des lignes prédécoupées 5 de fragilisation.

En outre, le ou les tissus 16 (figures 3 et 4) qui sont insérés dans l'élastomère 3 pour former le matériau composite 7 assurent la tenue mécanique de l'opercule flexible 1. Ce ou ces tissus sont réalisés, en particulier, à base de fibres de carbone ou de fibres de verre, ou bien de fibres textiles (polyester, polyamide,...).

Le matériau composite 7 permet également, grâce à l'élastomère 3, de rendre l'opercule flexible 1 hermétique. L'élastomère 3 peut être réalisé en différentes matières. De préférence, cet élastomère est de type butyle, néoprène, silicone, ...

De plus, l'opercule flexible 1 est dimensionné de façon à permettre la re-fermeture des pétales 6 après un tir.

Dans un premier mode de réalisation représenté sur la figure 1, l'opercule flexible 1 comporte deux couches composites 2 qui sont agencées de part et d'autre de la lame métallique 4, sur les faces 4A et 4B de cette dernière.

Par ailleurs, dans un second mode de réalisation représenté sur la figure 2, une seule couche composite 2 (tissu/élastomère) est prévue sur la face 4A externe de la lame métallique 4, c'est-à-dire sur la face 1A qui sera dirigée vers l'extérieur du conteneur dans la position montée de l'opercule flexible 1. Ceci permet de limiter les efforts nécessaires à l'ouverture.

Sur la figure 1, on a également représenté les faces internes 1B et 4B de l'opercule flexible 1 et de la lame métallique 4.

Par ailleurs, comme représenté sur les figures 1 et 2, l'opercule flexible 1 comporte, de plus, un revêtement antifriction 8 sur la face interne 1B, qui est donc destinée à être placée vers l'intérieur du conteneur.

Ce revêtement antifriction 8 permet, notamment, de limiter les frottements lors du passage du missile à travers l'opercule flexible 1.

Le revêtement antifriction 8 est réalisé par exemple à partir d'un matériau métallique, ce qui permet, en plus de réduire le coefficient de friction, d'assurer une continuité électrique.

La lame métallique 4 est donc fendue (figures 1 à 4), ce qui facilite le déchirement du matériau composite 7 (tissu/élastomère) de la couche composite 2 suivant des directions précises. De préférence, les lignes prédécoupées 5 sont agencées radialement par rapport au centre 9 de l'opercule flexible 1, comme représentée sur les figures 3 et 4.

Dans le mode de réalisation représenté, la ou les couches composites 2 et la lame métallique 4 sont agencées de sorte qu'au moins certaines des lignes prédécoupées 5 de la lame métallique 4 sont adaptées à au moins une orientation D1, D2 d'au moins certains des fils (ou fibres) 10 du tissu 16 du matériau composite 7 de la couche composite 2. Plus précisément, les lignes prédécoupées 5 sont parallèles aux orientations D1 et D2 des fils 10 du tissu 16.

En fonction de la taille du missile et de l'opercule, les lignes prédécoupées 5 (ou fentes) de la lame métallique 4 sont plus ou moins nombreuses, par exemple deux lignes orientées selon les diagonales comme sur l'exemple de la figure 3 ou quatre lignes orientées selon les diagonales et les médiatrices des côtés comme représenté sur la figure 4.

D'autres formes peuvent bien entendu être prévues pour les lignes prédécoupées dans le cadre de la présente invention.

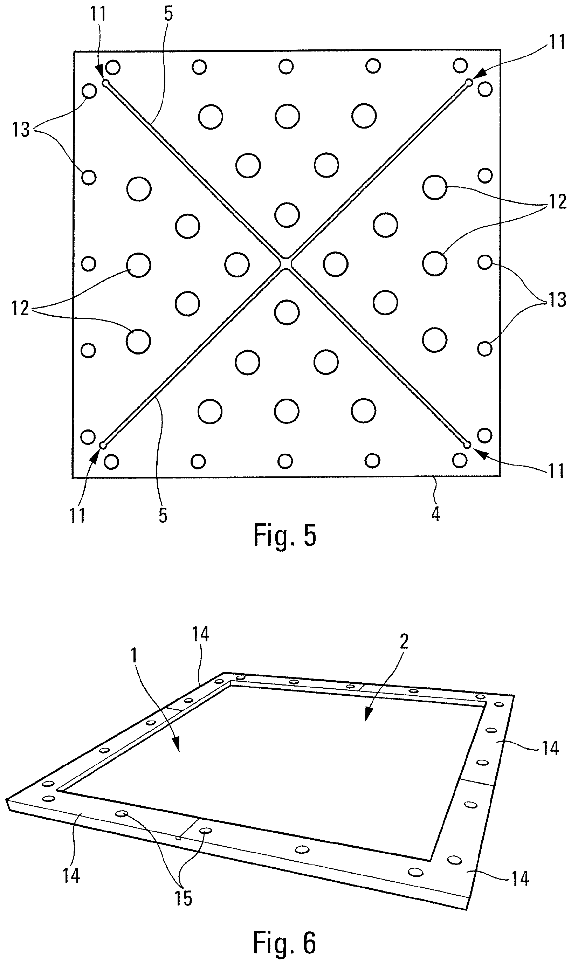

Par ailleurs, dans un mode de réalisation préféré, représenté sur la figure 5, la lame métallique 4 est une pièce unique, dans laquelle sont pratiquées les lignes prédécoupées 5 pour assurer le déchirement (selon les diagonales par exemple). Les extrémités des lignes prédécoupées 5 sont pourvues, chacune, d'un perçage 11 rond.

La lame métallique 4 comporte, comme représenté sur la figure 5, des évidements supplémentaires 12, de toutes formes possibles, notamment ronds, pour permettre de recevoir une partie de l'élastomère de la ou des couches composites 2. Ceci permet d'assurer une bonne répartition de l'élastomère et une bonne fixation.

En outre, la lame métallique 4 comprend également des ouvertures (ou perçages) 13 pour le passage de vis de bridage.

Ainsi, dans ce cas, plusieurs éléments 14 (ou brides), par exemple en acier inoxydable, en particulier quatre éléments 14 en forme d'équerre comme représenté dans l'exemple de la figure 6, permettent de brider l'opercule flexible 1 sur le conteneur (non représenté) à l'aide de vis passant par des trous 15.

A titre d'illustration, l'opercule flexible 1 peut être conçu pour des conteneurs de dimensions variables, de préférence :
- pour un conteneur cylindrique, comprises entre 100 mm (millimètres) et 1000 mm de diamètre ; et
- pour un conteneur parallélépipédique, de section comprise entre 100x100 mm et 1000x1000 mm.

De plus, l'opercule flexible 1 est conçu, de préférence, pour tenir des pressions comprises entre 1 et 5 bars, et pour s'ouvrir à partir de 5 bars.

L'opercule flexible 1, tel que décrit ci-dessus, présente notamment les avantages suivants :
- ouverture et re-fermeture facilitées ;
- coût de fabrication réduit ;
- masse réduite ;
- absence de production de débris.

On présente, à présent, de façon générale, un procédé de fabrication d'un opercule flexible 1 tel que décrit ci-dessus. Ce procédé de fabrication comprend, notamment, les étapes suivantes :
- imprégnation du tissu par dépose de plaque d'élastomère sur et sous le tissu, puis calandrage de l'ensemble pour imprégner le tissu dans l'élastomère ;
- moulage des pétales avec la lame métallique ; et
- assemblage des différentes couches de l'opercule flexible par vulcanisation.

On précise également le fonctionnement de l'opercule flexible 1. Lors de la génération d'une poussée pour ouvrir l'opercule flexible 1 fermant le conteneur, en vue d'un tir d'un missile installé dans le conteneur, à partir d'une certaine pression (par exemple 5 bars), l'opercule flexible 1 (et plus particulièrement la ou les couches composites 2 et le cas échéant également le revêtement antifriction 8) se déchire selon les lignes prédécoupées 5, et les pétales flexibles 6 ainsi formées se courbent vers l'extérieur pour ouvrir l'opercule flexible 1 et libérer le passage pour le missile. Après la sortie du missile du conteneur, les pétales flexibles 6 reviennent vers une position initiale pour que l'opercule flexible 1 soit proche de sa position avant l'ouverture pour permettre la fermeture de la porte de l'alvéole.

Une application possible de l'invention concerne un conteneur d'un lanceur de missiles, qui est embarqué sur un navire. Un tel conteneur comporte généralement une série d'alvéoles, chaque alvéole étant destinée à recevoir un missile placé dans son conteneur. La partie supérieure d'une alvéole débouche au niveau du pont du navire et est fermée, en dehors des phases de lancement, par une porte. La partie inférieure d'une alvéole comporte une ouverture de communication débouchant dans une chambre destinée à recevoir les gaz émis lors du lancement d'un missile. Les parties supérieure et inférieure de chaque conteneur sont obturées de manière étanche, par un couvercle muni d'un opercule flexible haut, tel que l'opercule flexible 1 précisé ci-dessus, et par un fond muni, par exemple, également d'un opercule flexible bas tel que l'opercule flexible 1. Le volume intérieur du conteneur est, en général, rempli d'un gaz inerte en surpression par rapport à l'atmosphère. Lors du lancement du missile, une porte de l'alvéole est ouverte, et le missile est mis à feu. Les gaz de propulsion font alors augmenter la pression et la température de manière importante à l'intérieur du conteneur, ce qui perfore l'opercule flexible haut du conteneur (et le cas échéant ouvre l'opercule flexible bas). Après le tir, le ou les opercules flexibles reviennent à peu près dans leur position initiale et la porte de l'alvéole est refermée.

## Revendications

1. Opercule flexible, destiné à être monté sur un conteneur de missile et apte à s'ouvrir sous une poussée, ledit opercule flexible comportant:
- au moins une couche (2) dite composite, formée d'un matériau composite (7) constitué d'au moins un tissu (16) et d'au moins un élastomère (3) ; et
- au moins une lame métallique (4) plane, solidarisée de ladite couche composite (2) par de l'élastomère (3) du matériau composite (7) et comprenant des lignes prédécoupées (5) de fragilisation de l'opercule flexible (1), les lignes prédécoupées (5) étant agencées de manière à créer des zones (6) en forme de pétales.

2. Opercule flexible selon la revendication 1,
**caractérisé en ce qu'**il comporte deux couches composites (2) agencées de part et d'autre de la lame métallique (4).

3. Opercule flexible selon l'une quelconque des revendications précédentes,
**caractérisé en ce qu'**il comporte un revêtement antifriction (8) sur une face dite interne (1A) destinée à être placée vers l'intérieur du conteneur.

4. Opercule flexible selon l'une quelconque des revendications précédentes,
**caractérisé en ce que** les lignes prédécoupées (5) sont agencées radialement par rapport au centre (9) de l'opercule flexible (1).

5. Opercule flexible selon l'une quelconque des revendications précédentes,
**caractérisé en ce que** ladite au moins une couche composite (2) et la lame métallique (4) sont agencées de sorte qu'au moins certaines des lignes prédécoupées (5) de la lame métallique (4) sont parallèles à au moins une orientation (D1, D2) de fils (10) du tissu (16) du matériau composite (7) de la couche composite (2).

6. Opercule flexible selon l'une quelconque des revendications précédentes,
**caractérisé en ce que** la lame métallique (4) est une pièce unique, dans laquelle sont pratiquées lesdites lignes prédécoupées (5).

7. Opercule flexible selon l'une quelconque des revendications précédentes,
**caractérisé en ce que** la lame métallique (4) comporte des évidements (12) pour permettre de recevoir une partie de l'élastomère (3) de ladite au moins une couche composite (2).

8. Conteneur de missile,
**caractérisé en ce qu'**il comporte au moins un opercule flexible (1) selon l'une quelconque des revendications 1 à 7.

9. Système d'arme,
**caractérisé en ce qu'**il comporte au moins un conteneur de missile selon la revendication 8.

## Patentansprüche

1. Flexibler Deckel, der dazu vorgesehen ist, auf einem Flugkörper-Behälter montiert zu werden und in der Lage ist, sich unter einem Schub zu öffnen, wobei der flexible Deckel umfasst:
- mindestens eine so genannte Verbundschicht (2), die aus einem Verbundmaterial (7) gebildet ist, das aus mindestens einem Gewebe (16) und aus mindestens einem Elastomer (3) besteht; und
- mindestens ein planes Metallblatt (4), das über Elastomer (3) des Verbundmaterials (7) fest mit der Verbundschicht (2) verbunden ist und vorgeschnittene Linien (5) zum Schwächen des flexiblen Deckels (1) umfasst, wobei die vorgeschnittenen Linien (5) so angeordnet sind, dass Bereiche (6) in Form von Blütenblättern gebildet werden.

2. Flexibler Deckel nach Anspruch 1,
**dadurch gekennzeichnet, dass** er zwei Verbundschichten (2) umfasst, die auf beiden Seiten des Metallblatts (4) angeordnet sind.

3. Flexibler Deckel nach einem der vorstehenden Ansprüche,
**dadurch gekennzeichnet, dass** er eine reibungsmindernde Beschichtung (8) auf einer so genannten Innenseite (1A) umfasst, die dazu vorgesehen ist, zum Inneren des Behälters hin platziert zu werden.

4. Flexibler Deckel nach einem der vorstehenden Ansprüche,
**dadurch gekennzeichnet, dass** die vorgeschnittenen Linien (5) in Bezug auf die Mitte (9) des flexiblen Deckels (1) radial angeordnet sind.

5. Flexibler Deckel nach einem der vorstehenden Ansprüche, **dadurch gekennzeichnet, dass** die mindestens eine Verbundschicht (2) und das Metallblatt (4) derart angeordnet sind, dass mindestens gewisse der vorgeschnittenen Linien (5) des Metallblatts (4) zu mindestens einer Ausrichtung (D1, D2) von Fäden (10) des Gewebes (16) des Verbundmaterials (7) der Verbundschicht (2) parallel sind.

6. Flexibler Deckel nach einem der vorstehenden Ansprüche,
**dadurch gekennzeichnet, dass** das Metallblatt (4) ein einstückiges Teil ist, in dem die vorgeschnittenen Linien (5) ausgebildet sind.

7. Flexibler Deckel nach einem der vorstehenden Ansprüche,
**dadurch gekennzeichnet, dass** das Metallblatt (4) Ausnehmungen (12) umfasst, um das Aufnehmen eines Teils des Elastomers (3) der mindestens einen Verbundschicht (2) zu ermöglichen.

8. Flugkörper-Behälter,
**dadurch gekennzeichnet, dass** er mindestens einen flexiblen Deckel (1) nach einem der Ansprüche 1 bis 7 umfasst.

9. Waffensystem, **dadurch gekennzeichnet, dass** es mindestens einen Flugkörper-Behälter nach Anspruch 8 umfasst.

## Claims

1. Flexible seal that is intended to be mounted on a missile container and is capable of opening under a thrust,
said flexible seal comprising :
- at least one layer (2), referred to as a composite layer, made of a composite material (7) consisting of at feast one fabric (16) and at least one elastomer (3); and
- at least one flat metal sheet (4), rigidly connected to said composite layer (2) by the elastomer (3) of the composite material (7) and including pre-cut lines (5) of weakness in the flexible seal (1), the pre-cut lines (5) being arranged so as to create petal-shaped regions (6).

2. Flexible seal according to claim 1,
**characterised in that** it comprises two composite layers (2) arranged on either side of the metal sheet (4).

3. Flexible seal according to any of the preceding claims,
**characterised in that** it comprises an anti-friction covering (8) on a surface (1A), referred to as an inner surface, intended to be positioned towards the interior of the container.

4. Flexible seal according to any of the preceding claims,
**characterised in that** the pre-cut lines (5) are arranged radially with respect to the centre (9) of the flexible seal (1).

5. Flexible seal according to any of the preceding claims,
**characterised in that** said at least one composite layer (2) and the metal sheet (4) are arranged such that at least some of the pre-cut lines (5) of the metal sheet (4) are parallel to at least one direction (D1, D2) of the thread (10) of the fabric (16) of the composite material (7) of the composite layer (2).

6. Flexible seal according to any of the preceding claims,
**characterised in that** the metal sheet (4) is a single part in which said pre-cut lines (5) are made.

7. Flexible seal according to any of the preceding claims,
**characterised in that** the metal sheet (4) comprises recesses (12) for receiving a portion of the elastomer (3) of said at least one composite layer (2).

8. Missile container,
**characterised in that** it comprises at least one flexible seal (1) according to any of claims 1 to 7.

9. Weapons system,
**characterised in that** it comprises at least one missile container according to claim 8.
